(19) **Europäisches Patentamt / European Patent Office / Office européen des brevets**

(11) **EP 4 603 937 A1**

(12) **EUROPEAN PATENT APPLICATION**
published in accordance with Art. 153(4) EPC

(43) Date of publication:
**20.08.2025  Bulletin 2025/34**

(21) Application number: **23877480.6**

(22) Date of filing: **30.08.2023**

(51) International Patent Classification (IPC):
**G05D 1/20** (2024.01)          **G05D 1/00** (2024.01)
**G06T 7/136** (2017.01)        **G06T 7/11** (2017.01)
**B25J 9/16** (2006.01)

(52) Cooperative Patent Classification (CPC):
**G05D 1/2464; B25J 9/16; G01C 21/206;
G01C 21/383; G05D 1/644; G06T 7/11;
G06T 7/136;** G05D 2105/87; G05D 2107/60;
G05D 2109/10

(86) International application number:
**PCT/KR2023/012892**

(87) International publication number:
**WO 2024/080550 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.10.2022  KR 20220129661**

(71) Applicant: **Ewha University-Industry
Collaboration Foundation
Seoul 03760 (KR)**

(72) Inventors:
• **KIM, Young Jun**
  **Seoul 06521 (KR)**
• **HAN, Kyung Min**
  **Seoul 03760 (KR)**

(74) Representative: **Biallo, Dario et al
Barzanò & Zanardo S.p.A.
Via Borgonuovo, 10
20121 Milano (IT)**

(54) **AUTONOMOUS SEARCH METHOD AND COMPUTING DEVICE FOR PERFORMING SAME METHOD**

(57)    The present disclosure relates to an autonomous search method for autonomously searching a target space having an unknown environment by a mobile robot. Specifically, the autonomous search method comprises, by using a boundary detection algorithm (fast front propagation (FFP)), an obstacle filter function (cost-map filter), and a boundary filter function (grid-map filter), maximizing a search range for a target space having an unknown environment and determining an optimal moving path to search an unknown area in the target space.

FIG. 1

EP 4 603 937 A1

**Description**

**TECHNICAL FIELD**

The present disclosure relates to an autonomous exploration method and a computing device for performing the autonomous exploration method, and more particularly, to an autonomous exploration method for exploration of a target space having an unknown environment and a mobile robot.

**BACKGROUND ART**

In general, robots perform tasks such as manipulation or movement by autonomous judgment and are used to perform various tasks especially on behalf of humans. These days, the use of robots in real life is increasing. In order for these robots to perform autonomous driving tasks, technologies such as mapping, localization, path planning, and obstacle avoidance and tracking are required. Among these technologies, path planning is used as an indicator to evaluate the performance of robots.

First, the performance of a robot by path planning may be evaluated by deriving an efficient path between a starting point and a destination on a map provided to the robot. In this case, the derived path may be generated as a short path in terms of distance between two points or a fast path in terms of time, which accounts for most of the path planning research.

Next, the performance of the robot by path planning may be evaluated by the exploration ability to find a new area rather than finding a path between two points. This exploration ability of the robot by path planning varies depending on the information about an environment in which the robot operates, that is, the presence or absence of a map. In this case, a state in which the robot has a map is called a known environment, and a state in which the robot has no map is called an unknown environment. In the known environment, exploration begins after path generation is completed based on a map provided in advance, and in the unknown environment, exploration begins without a map.

**DISCLOSURE OF THE INVENTION**

**TECHNICAL GOALS**

The present disclosure provides an autonomous exploration method that discovers a new unknown area according to an exploration conducted by a mobile robot while maintaining the accuracy of detecting a boundary area of a target space in an unknown environment.

The present disclosure provides an autonomous exploration method in which even the details of an occupancy grid map are displayed in detail through the discovery of a new unknown area by applying a boundary detection algorithm (fast front propagation (FFP)), a boundary filter function, and an obstacle filter function to more accurately extract a meaningful boundary area from among a plurality of boundary areas.

The present disclosure provides an autonomous exploration method that determines an optimal moving path while minimizing the exploration time by searching a plurality of frontier points simultaneously and in parallel using a parallel path planning algorithm, wherein the plurality of frontier points are related to a boundary area.

The present disclosure provides an autonomous exploration method that explores all boundary areas through a mobile robot while improving the application speed of a boundary detection algorithm by performing down-sampling (DS) on an occupancy grid map.

**TECHNICAL SOLUTIONS**

An autonomous exploration method according to an embodiment of the present disclosure includes generating an occupancy grid map for a target space in which an unknown area exists, extracting, using a boundary detection algorithm, a plurality of frontier points for exploring the unknown area on the occupancy grid map, removing a spurious point corresponding to an outlier from among the extracted plurality of frontier points, and determining, using a parallel path algorithm, an optimal frontier point among frontier points from which the spurious point is removed.

The extracting of the plurality of frontier points may include performing, based on a start position of a mobile robot, down-sampling (DS) on an occupancy grid map on which a target space is scanned, identifying a boundary cell in the occupancy grid map on which DS is performed by applying the boundary detection algorithm to the occupancy grid map on which DS is performed, and based on whether cells adjacent to the boundary cell are occupied, determining whether the boundary cell is a frontier point.

The removing of the spurious point may include calculating a cost map score indicating a probability of an obstacle existing in a nearby patch of each of the plurality of frontier points and determining, as a spurious point, a frontier point of which the calculated cost map score is greater than a preset threshold value, and removing the frontier point.

The removing of the spurious point may include performing boundary filtering for extracting a nearby patch of each of the plurality of frontier points and removing the spurious point based on a boundary measurement value for a nearby patch extracted through the boundary filtering.

The boundary measurement value for the nearby patch may be determined using a total number of cells comprised in the nearby patch and a number of unknown cells in the nearby patch.

The determining of the optimal frontier point may include based on a current position of a mobile robot, searching for moving paths simultaneously and in parallel through a parallel path algorithm, wherein the moving paths respectively correspond to frontier points from which a spurious point is removed and determining, as the optimal frontier point, a frontier point corresponding to a shortest path distance by comparing respective path distances of the moving paths that are searched for simultaneously and in parallel.

The searching may include searching for moving paths simultaneously and in parallel, wherein the moving paths respectively correspond to the plurality of frontier points by considering a branch condition and a boundary condition for frontier points from which the spurious point is removed, the branch condition may be a start element for executing a plurality of threads, and the boundary condition may be an end element for searching for a moving path.

The autonomous exploration method may further include exploring, using the optimal frontier point, an unknown area in the target space through a mobile robot and displaying, on the occupancy grid map, an exploration trajectory for the unknown area of the target space explored by the mobile robot.

A computing device according to an embodiment of the present disclosure includes one or more processors and a memory configured to load and store a program executed by the processor, wherein the program may include instructions to perform an operation of generating an occupancy grid map for a target space in which an unknown area exists, an operation of extracting, using a boundary detection algorithm, a plurality of frontier points for exploring the unknown area on the occupancy grid map, an operation of removing a spurious point corresponding to an outlier from among the extracted plurality of frontier points, and an operation of determining, using a parallel path algorithm, an optimal frontier point among frontier points from which the spurious point is removed.

The processor may be configured to extract a plurality of frontier points by performing, based on a start position of a mobile robot, DS on an occupancy grid map on which a target space is scanned, identifying a boundary cell in the occupancy grid map on which DS is performed by applying the boundary detection algorithm to the occupancy grid map on which DS is performed, and based on whether cells adjacent to the boundary cell are occupied, determining whether the boundary cell is a frontier point.

The processor may be configured to calculate a cost map score indicating a probability of an obstacle existing in a nearby patch of each of the plurality of frontier points and determine, as a spurious point, a frontier point of which the calculated cost map score is greater than a preset threshold value, and remove the frontier point.

The processor may be configured to perform boundary filtering for extracting a nearby patch of each of the plurality of frontier points and remove the spurious point based on a boundary measurement value for a nearby patch extracted through the boundary filtering.

The boundary measurement value for the nearby patch may be determined using a total number of cells comprised in the nearby patch and a number of unknown cells in the nearby patch.

The processor may be configured to search for moving paths simultaneously and in parallel through a parallel path algorithm, wherein the moving paths respectively correspond to frontier points from which a spurious point is removed based on a current position of a mobile robot and determine, as an optimal frontier point, a frontier point corresponding to a shortest path distance by comparing respective path distances of the moving paths that are searched for simultaneously and in parallel.

The processor may be configured to search for moving paths simultaneously and in parallel, wherein the moving paths respectively correspond to the plurality of frontier points by considering a branch condition and a boundary condition for frontier points from which the spurious point is removed, and wherein the branch condition may be a start element for executing a plurality of threads, and the boundary condition is an end element for searching for a moving path.

The processor may be configured to explore, using the optimal frontier point, an unknown area in the target space through a mobile robot and display, on the occupancy grid map, an exploration trajectory for the unknown area of the target space explored by the mobile robot.

## EFFECTS OF THE INVENTION

The autonomous exploration method according to an embodiment of the present disclosure may discover a new unknown area according to a exploration conducted by a mobile robot while maintaining the accuracy of detecting a boundary area of a target space in an unknown environment.

The autonomous exploration method according to an embodiment of the present disclosure may more accurately extract a meaningful boundary area from among a plurality of boundary areas by applying a boundary filter function and an obstacle filter function of a boundary detection algorithm (FFP), thereby displaying even the details of an occupancy grid map through the discovery of a new unknown area.

The autonomous exploration method according to an embodiment of the present disclosure may determine an optimal moving path while minimizing the exploration time by searching a plurality of frontier points simultaneously and in parallel using a parallel path algorithm, wherein the plurality of frontier points are related to a boundary area.

The autonomous exploration method according to an embodiment of the present disclosure may explore all boundary areas through a mobile robot while improving the application speed of a boundary detection algorithm by performing DS on an occupancy grid map.

## BRIEF DESCRIPTION OF DRAWINGS

FIG. 1 is a diagram illustrating a computing device according to an embodiment of the present disclosure.

FIG. 2 is a flowchart illustrating an autonomous exploration method according to an embodiment of the present disclosure.

FIG. 3 is a diagram illustrating small patches around an ideal frontier point with $\rho = 1$ according to an embodiment of the present disclosure.

FIG. 4 is a diagram illustrating a method of extracting a plurality of frontier points using a boundary detection algorithm according to an embodiment of the present disclosure.

FIG. 5 is a diagram illustrating a method of determining an optimal frontier point using a parallel path algorithm according to an embodiment of the present disclosure.

FIG. 6 is a drawing illustrating an operation in which a mobile robot equipped with a computing device according to an embodiment of the present disclosure explores a plurality of areas included in a target space.

FIG. 7 illustrates graphs showing performance according to different boundary detection algorithms according to an embodiment of the present disclosure.

FIG. 8 illustrates graphs showing the performance of a parallel path algorithm according to an embodiment of the present disclosure.

## BEST MODE FOR CARRYING OUT THE INVENTION

Hereinafter, embodiments are described in detail with reference to the accompanying drawings.

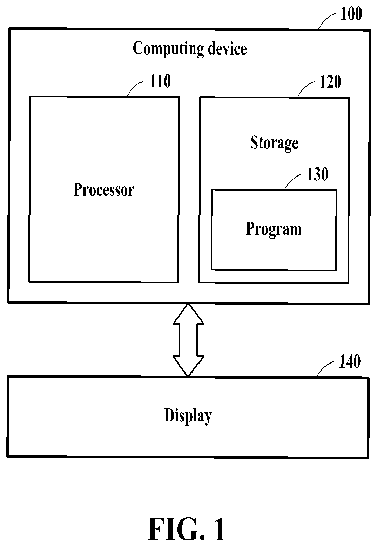

FIG. 1 is a diagram illustrating a computing device according to an embodiment of the present disclosure.

As illustrated in FIG. 1, a computing device 100 may include one or more processors 110 and a memory 120 for loading or storing a program 130 performed by a processor 110. The components included in the computing device 100 are just an example, and one of ordinary skill in the art may understand that other general-purpose components may be further included, besides the components illustrated in FIG. 1.

The processor 110 may control an overall operation of each component of the computing device 100. The processor 110 may include at least one of a central processing unit (CPU), a microprocessor unit (MPU), a microcontroller unit (MCU), a graphics processing unit (GPU), a neural processing unit (NPU), a digital signal processor (DSP), or other well-known types of processors in a relevant field of technology. In addition, the processor 110 may perform an operation of at least one application or program to execute the methods/operations according to various embodiments of the present disclosure. The computing device 100 may include one or more processors.

The memory 120 may store one of, or a combination of two or more of, various pieces of data, instructions, and pieces of information that are used by a component (e.g., the processor 110) included in the computing device 100. The memory 120 may include a volatile memory and/or a non-volatile memory.

The program 130 may include one or more actions through which the methods/operations according to various embodiments are implemented and may be stored in the memory 120 as software. In this case, an operation may correspond to a command that is implemented in the program 130. For example, the program 130 may include instructions to perform an operation of generating an occupancy grid map for a target space in which an unknown area exists, an operation of extracting a plurality of frontier points for exploring the unknown area on the occupancy grid map using a boundary detection algorithm, an operation of removing a spurious point corresponding to an outlier from among the extracted plurality of frontier points, and an operation of determining an optimal frontier point among frontier points from which the spurious point is removed using a parallel path algorithm.

When the program 130 is loaded in the memory 120, the processor 110 may execute a plurality of operations to implement the program 130 and perform the methods/operations according to various embodiments.

An execution screen of the program 130 may be displayed on a display 140. Referring to FIG. 1, although the display 140 is illustrated as being a separate device connected to the computing device 100, the display 140 may be included in the components of the computing device 100 when the computing device 100 is a smartphone, a tablet, or other terminals that are portable by a user. The screen displayed on the display 140 may be a state before information is input to the program 130 or may be an execution result of the program 130.

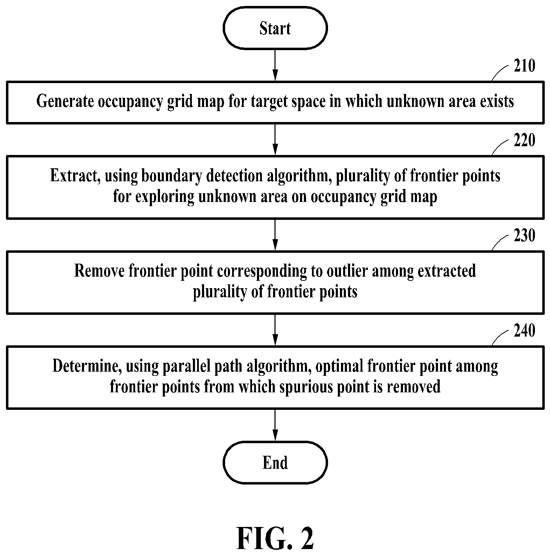

FIG. 2 is a flowchart illustrating an autonomous exploration method according to an embodiment of the present disclosure.

The autonomous exploration method illustrated in FIG. 2 may be performed by a processor of a computing device. In this case, the computing device may be mounted on a mobile robot moving through a target space and may control the mobile robot to autonomously explore an unknown area existing in the target space.

In operation 210, the processor may generate an occupancy grid map for a target space in which an unknown area exists. More particularly, the processor may collect a front image of the mobile robot by controlling the mobile robot to scan the target space based on the current position of the mobile robot that enters the target space. The processor may use the front image of the mobile robot collected in this way to generate the occupancy grid map corresponding to the target space.

In operation 220, the processor may extract a plurality of frontier points for exploring the unknown area on the occupancy grid map using a boundary detection algorithm. More particularly, the processor may scan the entire occupancy grid map to identify and store a boundary cell, revisit the stored boundary cell to identify a frontier area corresponding to an unexplored unknown area, and then calculate a frontier point corresponding to the identified frontier area.

In operation 230, the processor may remove a frontier point corresponding to an outlier from among the extracted plurality of frontier points. For example, the plurality of frontier points extracted through the boundary detection algorithm may include frontier points (hereinafter, referred to as "spurious points") corresponding to cells surrounded by obstacles or cells that the mobile robot may not reach due to false detection caused by a scan error of a laser sensor or the like. Conducting an exploration process of the mobile robot by considering all of these spurious points may lead to serious inefficiencies.

Therefore, the processor may remove spurious points among the plurality of frontier points extracted through the boundary detection algorithm using a boundary filter function and an obstacle filter function.

First, the processor may use the obstacle filter function to determine, as spurious points, frontier points surrounded by obstacles and remove the frontier points surrounded by the obstacles. More particularly, the processor may identify small patches around each of the plurality of frontier points. In this case, the size of a small patch may be determined by a definition defined by the user. For example, when a small patch is defined as 20 by 20 pixels, the processor may identify, as small patches, the pixels included in a 20 by 20 sized window centered on a frontier point by only cutting out the pixels included in the 20 by 20 sized window.

The processor may calculate a cost map score indicating the probability of an obstacle existing in the identified small patches for each of the plurality of frontier points. In this case, an obstacle filter response may be designed to be lowered as there are many obstacles around a frontier point.

The processor may determine, as a spurious point, a frontier point of which a cost map score calculated in this manner is greater than a preset threshold value and remove this frontier point.

Next, the processor may determine and remove a spurious point among the plurality of frontier points based on a calculated boundary measurement value using the boundary filter function. More particularly, the processor may perform boundary filtering to extract small patches around each of the plurality of frontier points. Then, the processor may obtain a boundary measure-

ment value $\rho$ for small patches $\mathcal{P}$ extracted through boundary filtering using Equation 1 below.

<Equation 1>

$$\rho = 1 - 2 \left| \frac{|\mathcal{P}_u|}{|\mathcal{P}|} - \frac{1}{2} \right|$$

Here, $|\mathcal{P}|$ may denote the total number of cells of the extracted small patches $\mathcal{P}$, and $|\mathcal{P}_u|$ may denote the number of unknown cells in the small patches $\mathcal{P}$.

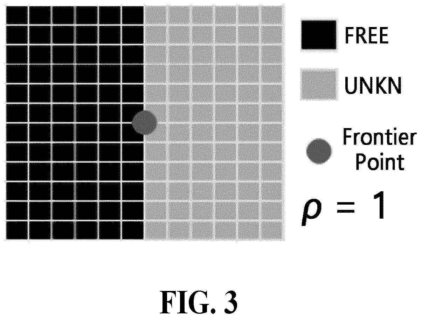

In this case, it is likely that a candidate point $f_c$ of which the boundary measurement is $\rho \approx 1$ is on the edge of an unexplored unknown area, so a probability that the mobile robot discovers map information when visiting a corresponding region may increase. For example, FIG. 3 is a diagram illustrating small patches around an ideal frontier point with $\rho = 1$ according to an embodiment of the present disclosure.

In operation 240, the processor may determine an optimal frontier point among the frontier points from which the spurious point is removed using a parallel path algorithm. More particularly, the processor may search for moving paths simultaneously and in parallel through the parallel path algorithm, wherein the moving paths respectively correspond to the frontier points from which the spurious point is removed based on the current position of the mobile robot. The processor may determine, as the optimal frontier point, a frontier point corresponding to the shortest moving path among moving paths searched for simultaneously through the parallel path algorithm.

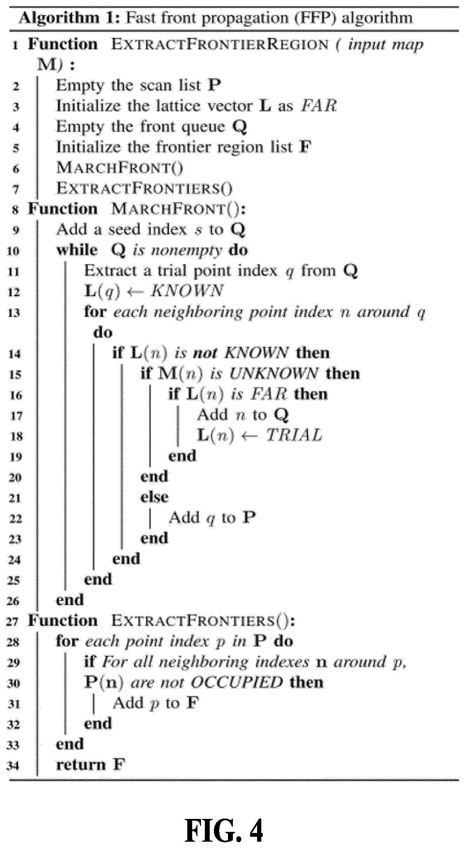

FIG. 4 is a diagram illustrating a method of extracting a plurality of frontier points using a boundary detection algorithm according to an embodiment of the present disclosure.

Algorithm 1 shown in FIG. 4 may be performed by a processor of a computing device and may provide a method of extracting frontier points existing in a boundary area between a free area and an unknown area in an occupancy grid map.

First, a scan list P and a front queue Q are empty. A grid vector L may be allocated with the same size as an occupancy grid map M and may be initialized with a *FAR* value, and a frontier area list F may also be initialized.

The processor may identify a boundary cell on the occupancy grid map related to a target space and store the boundary cell through the MARCHFRONT() function. More particularly, the MARCHFRONT() function may perform a process of finding a boundary set, and in this boundary set, a situation in which UNKNOWN and OCCUPIED are in contact with each other and a situation in which UNKNOWN and FREE are in contact with each other may exist.

In the boundary detection algorithm, the front queue Q set is always UNKNOWN, so the processor may search only for UNKNOWN through the MARCHFRONT() function to check whether each cell belongs to the boundary set. That is, when a cell q included in the front queue Q is UNKOWN, but all surrounding cells are FREE or OCCUPIED, the processor may identify the cell q as a boundary cell belonging to the boundary set and store the cell q.

Referring to Algorithm 1 in FIG. 4, the processor may add a seed index s to the front queue Q (line 9 in FIG. 4). If the front queue Q is empty, the processor may terminate the operation.

In contrast, if the front queue Q is not empty, the processor may check whether a cell $q \in Q$ included in the front queue Q and cells ($n$) adjacent to the cell q are boundary cells (i.e., $q \in B$) (lines 14 to 24 of FIG. 4). For example, the processor may determine that the cell $q$ is a boundary cell existing in a boundary area because the cell $q$ represents UNKNOWN when all of the cells $n$ adjacent to the cell q are not UNKNOWN cells.

The processor may store the cell $q$ in the scan list P (line 22 of FIG. 4) because the cell q, which is determined as a boundary cell, may potentially belong to a frontier area.

The processor may identify the frontier area through the EXTRACTFRONTIERS() function. More particularly, the EXTRACTFRONTIER() function may perform the process of finding the first of two boundary sets: 1) the situation in which UNKNOWN and FREE are in contact with each other, and 2) the situation in which UNKNOWN and OCCUPIED are in contact with each other.

Referring to Algorithm 1 of FIG. 4, the processor may add a cell $p$ to a frontier region F (lines 28 to 31 of FIG. 4) when all adjacent cells $n$ for each of the cells p stored in the scan list P have a not OCCUPIED UNKNOWN value.

Meanwhile, cells included in the frontier region F (in which UNKNOWN and FREE are in contact with each other) are identified as adjacent boundaries, and the processor may calculate the frontier point $f$ by clustering the adjacent boundaries and then calculating center points of respective clusters.

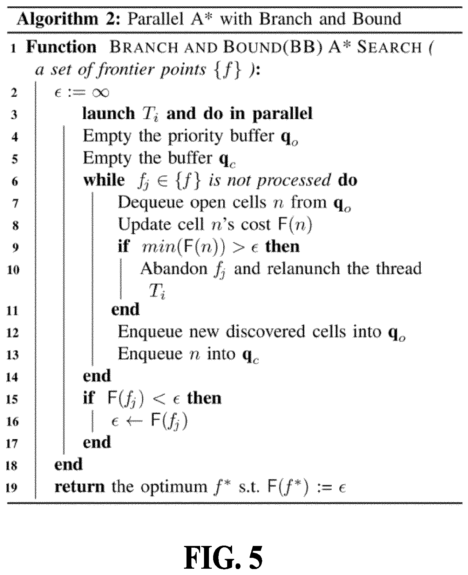

FIG. 5 is a diagram illustrating a method of determining an optimal frontier point using a parallel path algorithm according to an embodiment of the present disclosure.

FIG. 5 is a diagram illustrating a method of determining an optimal frontier point among frontier points from which a spurious point is removed using a parallel path algorithm, and Algorithm 2 shown in FIG. 5 is performed by a processor of a computing device.

The processor may determine an optimal frontier point among movable frontier points based on the current position of a mobile robot by applying a parallel path algorithm A* to the frontier points from which a spurious point is removed.

More particularly, based on the current position of the mobile robot, the processor may search for moving paths simultaneously and in parallel, wherein the moving paths respectively correspond to the frontier points from which a spurious point is removed. The processor may compare the path distances of the moving paths, which are searched for simultaneously and in parallel, to determine the optimal frontier point, which is a frontier point with the shortest path distance.

The parallel path algorithm may be an efficient graph search technique for finding an optimal moving path from a start node to a goal node. The parallel path algorithm may search a graph by selecting a frontier point, which is a goal node, when a start node is provided. The minimum cost by the parallel path algorithm may be expressed as Equation 2 below.

<Equation 2>

$$F(n) = G(n) + H(n)$$

Here, H(n) are heuristic functions, wherein G(n) may calculate the cost from the start node $n_s$ to the current node n and H(n) may estimate the cost from the current node n to the goal node $n_g$.

In this case, the processor may utilize a branch condition and a boundary condition to increase the accuracy of path search and minimize unnecessary search. The parallel path algorithm using the branch condition and the boundary condition may utilize the consistency property that the moving cost F(n) increases when a child node is opened toward a goal.

1) The branch condition may be a start element for launching a plurality of threads. For example, the branch condition may be an element that starts a plurality of threads Ti to perform A* search simultaneously by calculating Fi using Equation 2.

2) The bound condition may be an end element for searching for a moving path. For example, whenever a thread Ti encounters ε < Fi during an A* search, Ti may terminate, and ε may be initialized to a value greater than the upper limit of all Fi values.

3) The parallel path algorithm may update ε to Fi (ε := Fi) if Fi < ε after Ti successfully completes the search.

FIG. 5 may illustrate pseudocode of the parallel path algorithm A*. The parallel path algorithm of the present disclosure may initialize and track two lists of an open node and a closed node (rows 4 to 5 of Table 2). Then, each thread may start searching for a path using the parallel path algorithm A* based on a bounded condition (Line 9). Then, the present disclosure may terminate (row 10 of Table 2) a thread according to the condition bounded to the parallel path algorithm.

The parallel path algorithm of the present disclosure may update the boundary parameter ε (lines 15 to 17 of Table 2) if the thread finds a better path. Then, the parallel path algorithm of the present disclosure may determine the optimal frontier point f* with the shortest path length. The exploration trajectory of the optimal frontier point f* may be used as a global plan to guide a robot.

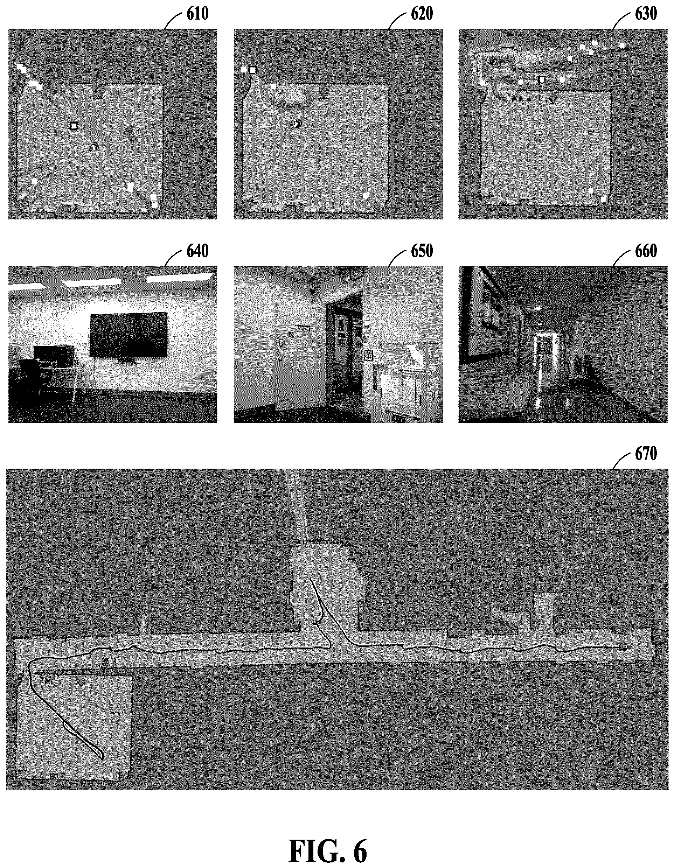

FIG. 6 is a drawing illustrating an operation in which a mobile robot equipped with a computing device according to an embodiment of the present disclosure explores a plurality of areas included in a target space.

Referring to FIG. 6, the computing device may determine a frontier point at which a new unknown area may be searched in a boundary area extracted from the target space having an unknown environment. The computing device may determine a boundary cell included in a boundary area between a free area and an unknown area within the target space by applying a boundary detection algorithm based on an occupancy grid map. In this case, the computing device may accelerate the speed according to the boundary detection algorithm by performing down-sampling (DS) on the size of the occupancy grid map while maintaining the accuracy of detecting the boundary cell included in the boundary area.

In addition, the computing device may prevent in advance the setting of a path to an impossible target point by analyzing boundary cells included in a boundary area and cells adjacent to the boundary cells to remove meaningless cells. Furthermore, the computing device may search for moving paths simultaneously and in parallel, wherein the moving paths correspond to respective frontier points so as to satisfy a branch condition and a boundary condition. In other words, the computing device may efficiently parallelize moving paths by a parallel path algorithm.

The computing device may generate a new occupancy grid map including an exploration trajectory for an unknown area of a target space explored by the mobile robot by displaying the exploration trajectory on the occupancy grid map. In other words, the computing device may build a new map in which an unknown area is searched by the mobile robot by synthesizing the exploration trajectory of the mobile robot into the occupancy grid map in real time.

A first drawing 610 to a sixth drawing 670 of FIG. 6 illustrate step-by-step autonomous driving of the mobile robot equipped with the computing device in the unknown environment.

Referring to the first drawing 610 of FIG. 6, the computing device may access a frontier point (or border point) to which the mobile robot first moves in frontier areas based on the current position of the mobile robot within the target space. The computing device may determine an optimal frontier point from among a plurality of frontier points and explore an unknown area of the target space using the determined optimal frontier point. The computing device may move the position of the mobile robot to the optimal frontier point and then scan the unknown area within a certain range and explore the unknown area.

Referring to the second drawing 620 of FIG. 6, the computing device may sequentially explore a second frontier point after the mobile robot reaches a first frontier point.

Referring to the third drawing 630 of FIG. 6, after the mobile robot reaches the second frontier point, a third frontier point, and the like, the computing device may continuously and subsequently explore new areas.

A fourth drawing 640, a fifth drawing 650, and a sixth drawing 660 are drawings showing views from the perspective of the mobile robot with respect to the first drawing 610, the second drawing 620, and the third drawing 630, respectively.

Referring to the seventh drawing 670 of FIG. 6, the computing device may check an occupancy grid map completed through the exploration trajectory of the mobile robot.

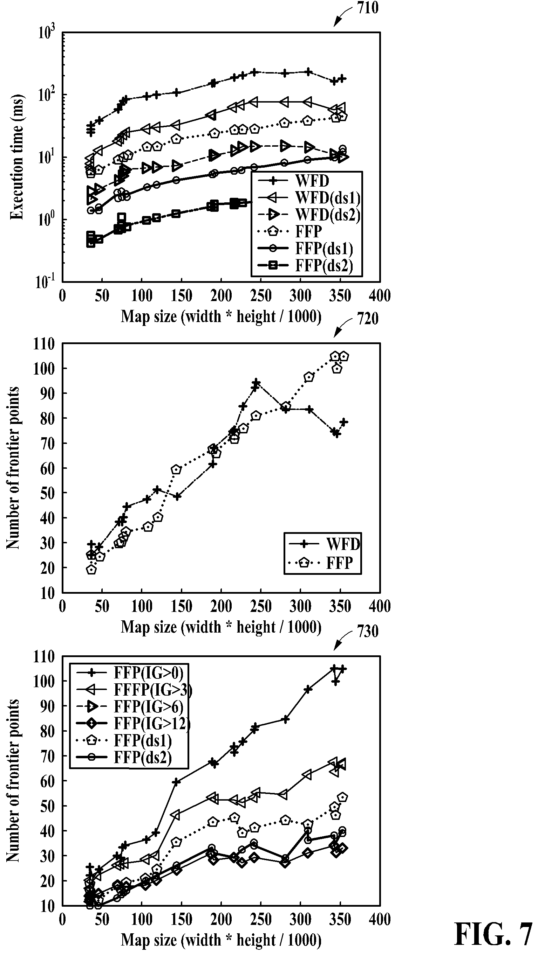

FIG. 7 illustrates graphs showing performance according to different boundary detection algorithms according to an embodiment of the present disclosure.

The graphs illustrated in FIG. 7 are results showing the performance of a boundary detection algorithm (fast front propagation (FFP)) and a wavefront detection method (wavefront frontier detection (WFD)) of the autonomous detection method proposed in the present disclosure. The present disclosure may perform DS on an occupancy grid map used to search for an optimal moving path in an unknown environment. The present disclosure may evaluate performance using an original occupancy grid map according to each method and an occupancy grid map on which DS is performed.

A computing device for performing the autonomous exploration method of the present disclosure may more accurately find a potential unknown area existing in a target space while searching the target space having an unknown environment. The computing device mounted on a mobile robot may understand a very large target space that increases in size up to 18 million (M) cells.

In a first graph 710 of FIG. 7, the X-axis may represent the size of an occupancy grid map, and the Y-axis may represent the execution time according to a logarithmic scale. Referring to the first graph 710 of FIG. 7, a boundary detection algorithm used in the autonomous exploration method may be about 6 times faster than a wavefront detection method, and this may be further accelerated as the map size of the occupancy grid map representing a target space is reduced.

Additionally, a boundary detection algorithm applied to an occupancy grid map on which double DS is performed may be about 14 times faster than a boundary detection algorithm applied to an original occupancy grid map and 87 times faster than a wavefront detection method applied to the original occupancy grid map.

In a second graph 720 and a third graph 730 of FIG. 7, the X-axis may represent the size of the occupancy grid map, and the Y-axis may represent the number of frontier points. The second graph 720 of FIG. 7 shows that the boundary detection algorithm and the wavefront detection method have similar performance in terms of the number of frontier points detected in the boundary area.

The third graph 730 of FIG. 7 shows that there is no particular difficulty in extracting a boundary area greater than or equal to a predetermined size even when DS is applied.

When information gain (IG) > 6, the boundary detection algorithm may imply that the performance of setting the size of a cluster of a boundary area as a threshold value is almost the same as the performance of applying single DS. Here, IG may represent the size of the boundary area. That is, the boundary detection algorithm may search for all the necessary frontier points at a rough level by considering only a cluster of a boundary area of reasonable size.

Here, when IG > 6, the boundary detection algorithm may refer to a cluster with a cell size greater than 6, and with the map resolution set to 0.05 meters (m), the boundary detection algorithm may represent an area of 0.3m. In this case, 0.3 m may be the size of a general household cleaning robot such as Turtlebot, and IG = 12 may be the size of a warehouse robot such as a Fetch robot. Therefore, the boundary detection algorithm using an occupancy grid map on which single DS is performed may find all boundary areas of a Turtlebot-sized robot.

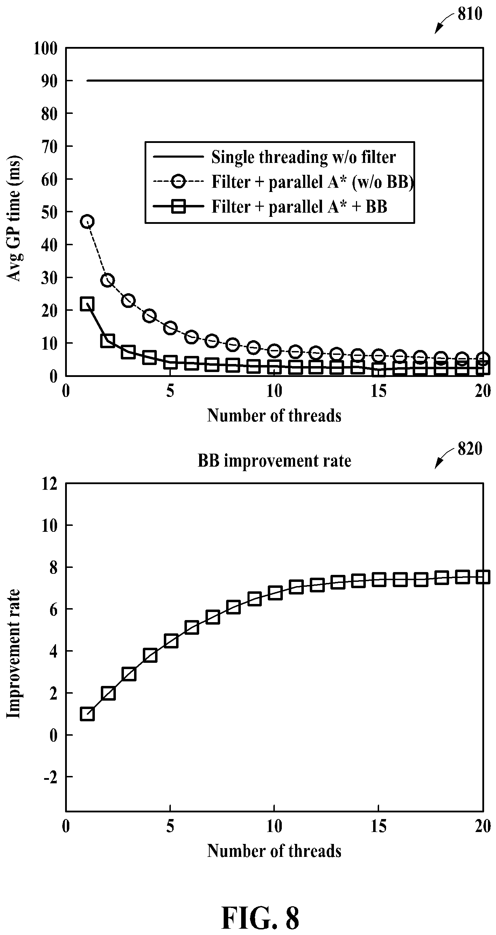

FIG. 8 illustrates graphs showing the performance of a parallel path algorithm according to an embodiment of the present disclosure.

The graphs illustrated in FIG. 8 are the results of improved relative runtime according to a thread plan based on the parallel path algorithm. Here, the parallel path algorithm may search for moving paths simultaneously and in parallel based on the current position of a mobile robot among boundary areas, wherein the moving paths respectively correspond to a plurality of goal points. The parallel path algorithm may search for moving paths simultaneously and in parallel, wherein the moving paths respectively correspond to a plurality of goal points so as to satisfy branch conditions and boundary conditions for the boundary areas.

Referring to a first graph 810 of FIG. 8, legend 1 (-) may represent the result of searching for a moving path (hereinafter, referred to as search ①) using a single thread that does not use a filter. "w/o filter" shown on the graph is an abbreviation for "without filter", which means that no filter is used.

Legend 2 (-⊙-) of the first graph 810 may represent the result of searching for a moving path (hereinafter, referred to as search ②) using a parallel path algorithm A* and a filter to which branch conditions and boundary conditions are not applied. "w/o BB" shown on the graph is an abbreviation for "without branch and bound", which means that branch conditions and boundary conditions are not applied.

Legend 3 (-⊞-) of the first graph 810 may represent the result of searching for a moving path (hereinafter, referred to as search ③) using parallel A* and a filter to which branch conditions and boundary conditions are applied.

Accordingly, search ③ to which the autonomous search method of the present disclosure is applied may be about twice as fast as search ②. For example, the autonomous search method may search about 30 times faster than search ② when 20 threads are running.

Referring to a second graph 820 of FIG. 8, the autonomous search method is a result showing an improvement in relative runtime according to a single-thread plan based on a front grid map.

Meanwhile, the method according to embodiments may be written in a computer-executable program and may be implemented as various recording media such as magnetic storage media, optical reading media, or digital storage media.

Various techniques described herein may be implemented in digital electronic circuitry, computer hardware, firmware, software, or combinations thereof. The implementations may be achieved as a computer program product, for example, a computer program tangibly embodied in a machine readable storage device (a computer-readable medium) to process the operations of a data processing device, for example, a programmable processor, a computer, or a plurality of computers or to control the operations. A computer program, such as the computer program(s) described above, may be written in any form of a programming language, including compiled or interpreted languages, and may be deployed in any form, including as a stand-alone program or as a module, a component, a subroutine, or other units suitable for use in a computing environment. A computer program may be deployed to be processed on one computer or multiple computers at one site or distributed across multiple sites and interconnected by a communication network.

Processors suitable for processing of a computer program include, by way of example, both general and special purpose microprocessors, and any one or more processors of any kind of digital computer. Generally, a processor may receive instructions and data from read-only memory (ROM) or random-access memory (RAM), or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Examples of information carriers suitable for embodying computer program instructions and data include semiconductor memory devices, e.g., magnetic media such as hard disks, floppy disks, and magnetic tape, optical media such as compact disk ROM (CD-ROM) or digital video disks (DVDs), magneto-optical media such as floptical disks, ROM, RAM, flash memory, erasable programmable ROM (EPROM), or electrically erasable programmable ROM (EEPROM). The processor and the memory may be supplemented by, or incorporated in special purpose logic circuitry.

In addition, non-transitory computer-readable media may be any available media that may be accessed by a computer and may include both computer storage media and transmission media.

Although the present specification includes details of a plurality of specific embodiments, the details should not be construed as limiting any invention or a scope that can be claimed, but rather should be construed as being descriptions of features that may be peculiar to specific embodiments of specific inventions. Specific features described in the present specification in the context of individual embodiments may be combined and implemented in a single embodiment. On the contrary, various features described in the context of a single embodiment may be implemented in a plurality of embodiments individually or in any appropriate sub-combination. Moreover, although features may be described above as acting in specific combinations and even initially claimed as such, one or more features from a claimed combination can in some cases be excised from the combination, and the claimed combination may be changed to a sub-combination or a modification of a sub-combination.

Likewise, although operations are depicted in a predetermined order in the drawings, it should not be construed that the operations need to be performed sequentially or in the predetermined order, which is illustrated to obtain a desirable result, or that all of the shown operations need to be performed. In specific cases, multitasking and parallel processing may be advantageous. In addition, it should not be construed that the separation of various device components of the aforementioned embodiments is required in all types of embodiments, and it should be understood that the described program components and devices are generally integrated as a single software product or packaged into a multiple-software product.

The embodiments disclosed in the present specification and the drawings are intended merely to present specific examples in order to aid in understanding of the present disclosure, but are not intended to limit the scope of the present disclosure. It will be apparent to one of one of ordinary skill in the art that various modifications based on the technical spirit of the present disclosure, as well as the disclosed embodiments, can be made.

**Claims**

1. An autonomous exploration method comprising:

   generating an occupancy grid map for a target space in which an unknown area exists;
   extracting, using a boundary detection algorithm, a plurality of frontier points for exploring the unknown area on the occupancy grid map;
   removing a spurious point corresponding to an outlier from among the extracted plurality of frontier points; and
   determining, using a parallel path algorithm, an optimal frontier point among frontier points from which the spurious point is removed.

2. The autonomous exploration method of claim 1, wherein the extracting of the plurality of frontier points comprises:

   performing, based on a start position of a mobile robot, down-sampling (DS) on an occupancy grid map on which a target space is scanned;
   identifying a boundary cell in the occupancy grid map on which DS is performed by applying the boundary detection algorithm to the occupancy grid map on which DS is performed; and
   based on whether cells adjacent to the boundary cell are occupied, determining whether the boundary cell is a frontier point.

3. The autonomous exploration method of claim 1, wherein the removing of the spurious point comprises:

   calculating a cost map score indicating a probability of an obstacle existing in a nearby patch of each of the plurality of frontier points; and
   determining, as a spurious point, a frontier point of which the calculated cost map score is greater than a preset threshold value, and removing the frontier point.

4. The autonomous exploration method of claim 1, wherein the removing of the spurious point comprises:

   performing boundary filtering for extracting a nearby patch of each of the plurality of frontier points; and
   removing the spurious point based on a boundary measurement value for a nearby patch extracted through the boundary filtering.

5. The autonomous exploration method of claim 4, wherein the boundary measurement value for the nearby patch is determined using a total number of cells comprised in the nearby patch and a number of unknown cells in the nearby patch.

6. The autonomous exploration method of claim 1, wherein the determining of the optimal frontier point comprises:

   based on a current position of a mobile robot, searching for moving paths simultaneously and in parallel through a parallel path algorithm, wherein the moving paths respectively correspond to frontier points from which a spurious point is removed; and

determining, as the optimal frontier point, a frontier point corresponding to a shortest path distance by comparing respective path distances of the moving paths that are searched for simultaneously and in parallel.

7. The autonomous exploration method of claim 6, wherein

the searching comprises searching for moving paths simultaneously and in parallel, wherein the moving paths respectively correspond to the plurality of frontier points by considering a branch condition and a boundary condition for frontier points from which the spurious point is removed,

the branch condition is a start element for executing a plurality of threads, and

the boundary condition is an end element for searching for a moving path.

8. The autonomous exploration method of claim 1, further comprising:

exploring, using the optimal frontier point, an unknown area in the target space through a mobile robot; and

displaying, on the occupancy grid map, an exploration trajectory for the unknown area of the target space explored by the mobile robot.

9. A computing device comprising:

one or more processors; and

a memory configured to load and store a program executed by the processor,

wherein the program comprises instructions to perform an operation of generating an occupancy grid map for a target space in which an unknown area exists, an operation of extracting, using a boundary detection algorithm, a plurality of frontier points for exploring the unknown area on the occupancy grid map, an operation of removing a spurious point corresponding to an outlier from among the extracted plurality of frontier points, and an operation of determining, using a parallel path algorithm, an optimal frontier point among frontier points from which the spurious point is removed.

10. The computing device of claim 9, wherein the processor is configured to extract a plurality of frontier points by performing, based on a start position of a mobile robot, down-sampling (DS) on an occupancy grid map on which a target space is scanned, identifying a boundary cell in the occupancy grid map on which DS is performed by applying the boundary detection algorithm to the occupancy grid map on which DS is performed, and based on whether cells adjacent to the boundary cell are occupied, determining whether the boundary cell is a frontier point.

11. The computing device of claim 9, wherein the processor is configured to calculate a cost map score indicating a probability of an obstacle existing in a nearby patch of each of the plurality of frontier points and determine, as a spurious point, a frontier point of which the calculated cost map score is greater than a preset threshold value, and remove the frontier point.

12. The computing device of claim 9, wherein the processor is configured to perform boundary filtering for extracting a nearby patch of each of the plurality of frontier points and remove the spurious point based on a boundary measurement value for a nearby patch extracted through the boundary filtering.

13. The computing device of claim 12, wherein the boundary measurement value for the nearby patch is determined using a total number of cells comprised in the nearby patch and a number of unknown cells in the nearby patch.

14. The computing device of claim 9, wherein the processor is configured to search for moving paths simultaneously and in parallel through a parallel path algorithm, wherein the moving paths respectively correspond to frontier points from which a spurious point is removed based on a current position of a mobile robot and determine, as an optimal frontier point, a frontier point corresponding to a shortest path distance by comparing respective path distances of the moving paths that are searched for simultaneously and in parallel.

15. The computing device of claim 14, wherein

the processor is configured to search for moving paths simultaneously and in parallel, wherein the moving paths respectively correspond to the plurality of frontier points by considering a branch condition and a boundary condition for frontier points from which the spurious point is removed, and wherein

the branch condition is a start element for executing a plurality of threads, and the boundary condition is an end element for searching for a moving path.

16. The computing device of claim 9, wherein the processor is configured to explore, using the optimal frontier point, an unknown area in the target space through a mobile robot and display, on the occupancy grid map, an exploration trajectory for the unknown area of the target space explored by the mobile robot.

FIG. 1

Start

210
Generate occupancy grid map for target space in which unknown area exists

220
Extract, using boundary detection algorithm, plurality of frontier points for exploring unknown area on occupancy grid map

230
Remove frontier point corresponding to outlier among extracted plurality of frontier points

240
Determine, using parallel path algorithm, optimal frontier point among frontier points from which spurious point is removed

End

# FIG. 2

**FREE**

**UNKN**

Frontier
Point

$\rho = 1$

**FIG. 3**

**Algorithm 1:** Fast front propagation (FFP) algorithm

**Function** EXTRACTFRONTIERREGION ( *input map* **M) :**

    Empty the scan list **P**

    Initialize the lattice vector **L** as *FAR*

    Empty the front queue **Q**

    Initialize the frontier region list **F**

    MARCHFRONT()

    EXTRACTFRONTIERS()

**Function** MARCHFRONT()**:**

    Add a seed index $s$ to **Q**

    **while** **Q** *is nonempty* **do**

        Extract a trial point index $q$ from **Q**

        $\mathbf{L}(q) \leftarrow KNOWN$

        **for** *each neighboring point index* $n$ *around* $q$ **do**

            **if** $\mathbf{L}(n)$ *is* **not** *KNOWN* **then**

                **if** $\mathbf{M}(n)$ *is UNKNOWN* **then**

                    **if** $\mathbf{L}(n)$ *is* $FAR$ **then**

                        Add $n$ to **Q**

                        $\mathbf{L}(n) \leftarrow TRIAL$

                  **end**

                **end**

                **else**

                    Add $q$ to **P**

                **end**

            **end**

        **end**

    **end**

**Function** EXTRACTFRONTIERS()**:**

    **for** *each point index* $p$ *in* **P do**

        **if** *For all neighboring indexes* **n** *around* $p$, **P(n)** *are* **not** *OCCUPIED* **then**

            Add $p$ to **F**

        **end**

    **end**

    **return F**

# FIG. 4

---

**Algorithm 2:** Parallel A* with Branch and Bound

---

**Function** BRANCH AND BOUND(BB) A* SEARCH (
*a set of frontier points* $\{f\}$ *):*

$\epsilon := \infty$

**launch** $T_i$ **and do in parallel**

Empty the priority buffer $\mathbf{q}_o$

Empty the buffer $\mathbf{q}_c$

**while** $f_j \in \{f\}$ *is not processed* **do**

Dequeue open cells $n$ from $\mathbf{q}_o$

Update cell $n$'s cost $\mathsf{F}(n)$

**if** $min(\mathsf{F}(n)) > \epsilon$ **then**

Abandon $f_j$ and relanunch the thread $T_i$

**end**

Enqueue new discovered cells into $\mathbf{q}_o$

Enqueue $n$ into $\mathbf{q}_c$

**end**

**if** $\mathsf{F}(f_j) < \epsilon$ **then**

$\epsilon \leftarrow \mathsf{F}(f_j)$

**end**

**end**

**return** the optimum $f^*$ s.t. $\mathsf{F}(f^*) := \epsilon$

---

# FIG. 5

**FIG. 6**

FIG. 7

FIG. 8

## INTERNATIONAL SEARCH REPORT

| International application No. |
| --- |
| **PCT/KR2023/012892** |

### A. CLASSIFICATION OF SUBJECT MATTER

**G05D 1/20**(2024.01)i; **G05D 1/00**(2006.01)i; **G06T 7/136**(2017.01)i; **G06T 7/11**(2017.01)i; **B25J 9/16**(2006.01)i

According to International Patent Classification (IPC) or to both national classification and IPC

### B. FIELDS SEARCHED

Minimum documentation searched (classification system followed by classification symbols)

G05D 1/20(2024.01); G06T 1/00(2006.01); G06T 11/00(2006.01); H04N 1/409(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경계(boundary), 그리드(grid), 경로(route), 스퓨리어스(spurious), FFD(Fast Frontier Detector), 구역(region)

### C. DOCUMENTS CONSIDERED TO BE RELEVANT

| Category* | Citation of document, with indication, where appropriate, of the relevant passages | Relevant to claim No. |
| --- | --- | --- |
| A | KEIDAR, Matan et al. EFFICIENT FRONTIER DETECTION FOR ROBOT EXPLORATION. The International Journal of Robotics Research. 22 October 2013.<br>See pages 3-6. | 1-16 |
| A | FUKUNAGA, Alex et al. A SURVEY OF PARALLEL A*. 18 August 2017.<br>See page 8. | 1-16 |
| A | 권용관. 가상 탄성력을 이용한 자율이동로봇 경로생성 방법. 한국전자통신학회 논문지. vol. 8, no. 1, pp. 149-157, 21 January 2013 (KWON, Young-Kwan. A Path Generation Method for a Autonomous Mobile Robot based on a Virtual Elastic Force. The Journal of The Korea Institute of Electronic Communication Sciences.)<br>See entire document. | 1-16 |
| A | JP 2004-201240 A (FUJITSU LTD. et al.) 15 July 2004 (2004-07-15)<br>See claim 1. | 1-16 |
| A | KR 10-0611328 B1 (KOREA UNIVERSITY RESEARCH AND BUSINESS FOUNDATION) 11 August 2006 (2006-08-11)<br>See claim 1. | 1-16 |

☐ Further documents are listed in the continuation of Box C.　　☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 January 2024** | **10 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/012892**

| Patent document cited in search report | | | Publication date (day/month/year) | Patent family member(s) | | | Publication date (day/month/year) |
|---|---|---|---|---|---|---|---|
| JP | 2004-201240 | A | 15 July 2004 | CN | 1324873 | C | 04 July 2007 |
| | | | | CN | 1525733 | A | 01 September 2004 |
| | | | | DE | 60311748 | T2 | 14 June 2007 |
| | | | | EP | 1431913 | A1 | 23 June 2004 |
| | | | | EP | 1431913 | B1 | 14 February 2007 |
| | | | | JP | 4067957 | B2 | 26 March 2008 |
| | | | | KR | 10-1011865 | B1 | 31 January 2011 |
| | | | | KR | 10-2004-0055686 | A | 26 June 2004 |
| | | | | TW | 200414750 | A | 01 August 2004 |
| | | | | TW | I295137 | B | 21 March 2008 |
| | | | | US | 2004-0170324 | A1 | 02 September 2004 |
| | | | | US | 7539344 | B2 | 26 May 2009 |
| KR | 10-0611328 | B1 | 11 August 2006 | None | | | |

Form PCT/ISA/210 (patent family annex) (July 2022)